# EUROPEAN PATENT APPLICATION

(11) **EP 4 442 364 A1**
(43) Date of publication of application: **09.10.2024**
(21) Application number: 22898403.5
(22) Date of filing: 09.11.2022
(51) Int. Cl.: B01J 29/76, B01D 53/94, B01J 35/04, B01J 37/025

(54) **EXHAUST GAS PURIFICATION CATALYST DEVICE**

(30) Priority: 29.11.2021 JP 2021193312
(71) Applicant: CATALER CORPORATION, Kakegawa-shi, Shizuoka 437-1492 (JP)
(72) Inventor: TERASAKI, Fumitaka, Kakegawa-shi, Shizuoka 437-1492 (JP)
(74) Representative: Ricker, Mathias
(86) International application number: PCT/JP2022/041750
(87) International publication number: WO 2023/095619

(57) **Abstract**

An exhaust gas purification catalyst device having a honeycomb substrate that has a plurality of exhaust gas flow paths divided by a partition wall, a catalyst noble metal particle carrier layer provided in or on the partition wall of the substrate, and a zeolite layer containing a copper ion exchange zeolite, the zeolite layer being located closer to the exhaust gas flow paths than the catalyst noble metal particle carrier layer, wherein the catalyst noble metal particle carrier layer includes catalyst noble metal particles, and the exhaust gas purification catalyst device furthermore has an inorganic oxide particle layer located between the catalyst noble metal particle carrier layer and the zeolite layer, the inorganic oxide particle layer containing non-silica inorganic oxide particles and having a catalyst noble metal content of less than 0.01 g/L.

## Description

### FIELD

The present invention relates to an exhaust gas purification catalyst device.

### BACKGROUND

Selective Catalytic Reduction (SCR) systems are known for reduction purification of NOx in exhaust gas emitted by diesel engines, prior to its being released into the air. SCR systems are a type of technology using a reducing agent such as ammonia to reduce NOₓ in exhaust gas to N₂.

Cu-zeolite (in which zeolite having a low Silica/Alumina Ratio (SAR) is ion-exchanged with copper (Cu)) used in SCR systems is known to exhibit excellent NOx purification performance in the low-temperature range.

PTL 1, for example, teaches that excellent NOx purification performance is exhibited by an exhaust gas purifying catalyst using Cu-CH type zeolite A in which chabazite-type zeolite is ion-exchanged with copper (Cu) (represented by the structure code "CHA").

SCR systems sometimes use an excess of reducing agent in order to achieve increased NOₓ reduction purification efficiency, and in such cases the non-reacting reducing agent which has not participated in reduction of NOₓ is emitted from the SCR catalyst. When ammonia is used as the reducing agent, emission of ammonia from the SCR catalyst is referred to as "ammonia slip".

The slipped ammonia is preferably purified (by oxidizing purification) using an ASC (Ammonia Slip Catalyst) before being released into the air. In an SCR system, the ASC is usually used by being layered with the SCR layer, for example, or being placed during a later stage of SCR.

One example of ASC, described in PTL 2, is a catalyst having an oxidation catalyst metal comprising platinum or a combination of platinum and palladium supported on a metal oxide support with a high surface area.

### [CITATION LIST]

### [PATENT LITERATURE]

[PTL 1] Japanese Patent Public Inspection No. 2012-507400
[PTL 2] Japanese Patent Public Inspection No. 2016-532548

### SUMMARY

### [TECHNICAL PROBLEM]

Using an SCR layer and ASC layer as a layered stack in an SCR system can provide advantages in terms of design of the exhaust system, allowing a more compact exhaust gas purification catalyst device to be produced. However, such stacked SCR-ASC systems, while exhibiting excellent initial activity, often have impaired NH₃ purification performance after hydrothermal endurance.

It is therefore an object of the present invention to provide a stacked SCR-ASC exhibiting excellent initial activity while also having superior ammonia purification performance at low temperature after hydrothermal endurance.

### [SOLUTION TO PROBLEM]

The present invention is as follows.

### <Aspect 1>

An exhaust gas purification catalyst device comprising:
a honeycomb substrate having numerous exhaust gas flow paths divided by partition walls,
a noble metal catalyst particle-supporting layer inside the partition walls or on the partition walls of the substrate, and
a zeolite layer which includes copper ion-exchanged zeolite further toward the exhaust gas flow path side than the noble metal catalyst particle-supporting layer,
wherein:
the noble metal catalyst particle-supporting layer includes noble metal catalyst particles, and
the exhaust gas purification catalyst device further comprises an inorganic oxide particle layer with inorganic oxide particles other than silica included between the noble metal catalyst particle-supporting layer and the zeolite layer, with a noble metal catalyst content of lower than 0.01 g/L.

### <Aspect 2>

The exhaust gas purification catalyst device according to aspect 1, wherein the coating thickness of the inorganic oxide particle layer is 2.0 µm or greater and 25.0 µm or smaller.

### <Aspect 3>

The exhaust gas purification catalyst device according to aspect 1 or 2, wherein the inorganic oxide particles in the inorganic oxide particle layer are particles of an oxide of one or more metals selected from among Ce, Ti, Zr, Al, La, Fe, Co, Mn, V, W, Cu and Ni.

### <Aspect 4>

The exhaust gas purification catalyst device according to any one of aspects 1 to 3, wherein the particle diameter (D50) of the inorganic oxide particles in the inorganic oxide particle layer is 0.5 µm or greater and 5.0 µm or smaller.

### <Aspect 5>

The exhaust gas purification catalyst device according to any one of aspects 1 to 4, wherein the silica-alumina ratio (SAR) of the copper ion-exchanged zeolite in the zeolite layer is 15.0 or lower.

### <Aspect 6>

The exhaust gas purification catalyst device according to any one of aspects 1 to 5, wherein the amount of Cu in the copper ion-exchanged zeolite in the zeolite layer is 0.10 mol or greater and 0.50 mol or lower with respect to 1 mol of Al atoms in the copper ion-exchanged zeolite.

### <Aspect 7>

The exhaust gas purification catalyst device according to any one of aspects 1 to 6, wherein the amount of copper ion-exchanged zeolite in the zeolite layer is 30 g/L or greater and 200 g/L or lower.

### <Aspect 8>

The exhaust gas purification catalyst device according to any one of aspects 1 to 7, wherein the copper ion-exchanged zeolite is Cu-CH type zeolite A.

### <Aspect 9>

The exhaust gas purification catalyst device according to any one of aspects 1 to 7, wherein the noble metal catalyst particle-supporting layer includes particles of a noble metal catalyst selected from among Pt, Rh and Pd.

### <Aspect 10>

The exhaust gas purification catalyst device according to any one of aspects 1 to 9, wherein the noble metal catalyst particles are directly supported inside the partition walls of the substrate, forming a noble metal catalyst particle-supporting layer.

### <Aspect 11>

The exhaust gas purification catalyst device according to any one of aspects 1 to 9, wherein the noble metal catalyst particles are supported on inorganic oxide particles other than silica, and the noble metal catalyst particles supported on the inorganic oxide particles other than silica are disposed on the partition walls of the substrate, forming a noble metal catalyst particle-supporting layer.

### [ADVANTAGEOUS EFFECTS OF INVENTION]

The invention provides a stacked SCR-ASC exhibiting especially superior ammonia purification performance at low temperature after hydrothermal endurance.

### BRIEF DESCRIPTION OF DRAWINGS

Fig. 1 is a scanning electron microscope image of the exhaust gas purification catalyst device obtained in Example 1.
Fig. 2 is a scanning electron microscope image of the exhaust gas purification catalyst device obtained in Comparative Example 1.

### DESCRIPTION OF EMBODIMENTS

### <Exhaust gas purification catalyst device>

The exhaust gas purification catalyst device of the invention is an exhaust gas purification catalyst device comprising:
a honeycomb substrate having numerous exhaust gas flow paths divided by partition walls,
a noble metal catalyst particle-supporting layer inside the partition walls or on the partition walls of the substrate, and
a zeolite layer which includes copper ion-exchanged zeolite further toward the exhaust gas flow path side than the noble metal catalyst particle-supporting layer,
wherein:
the noble metal catalyst particle-supporting layer includes noble metal catalyst particles, and
the exhaust gas purification catalyst device further comprises an inorganic oxide particle layer with inorganic oxide particles other than silica included between the noble metal catalyst particle-supporting layer and the zeolite layer, with a noble metal catalyst content of lower than 0.01 g/L.

The present inventors have studied in detail the causes of impaired ammonia purification performance of stacked SCR-ASC systems, especially at low temperature, after hydrothermal endurance. As a result it was found that the silica in the zeolite which is present in an SCR layer migrates into the ASC layer, thereby lowering the NH₃ purification activity of the noble metal catalyst in the ASC layer.

The present invention, having been devised on the basis of this knowledge, is an exhaust gas purification catalyst device comprising a stacked SCR-ASC system provided with an inorganic oxide particle layer as a barrier layer that prevents migration of silica between the zeolite layer (SCR layer) and the noble metal catalyst particle-supporting layer (ASC layer), so that the ammonia purification performance is maintained at low temperature even after hydrothermal endurance.

However, the present invention is not intended to be limited by this interpretation.

The elements of the exhaust gas purification catalyst device of the invention will now be explained in order.

As mentioned above, the exhaust gas purification catalyst device of the invention has a honeycomb substrate, a noble metal catalyst particle-supporting layer and a zeolite layer, and additionally has an inorganic oxide particle layer between the noble metal catalyst particle-supporting layer and the zeolite layer.

### <Substrate>

The substrate of the exhaust gas purification catalyst device of the invention is a honeycomb substrate comprising numerous exhaust gas flow paths partitioned by partition walls. The partition walls of the substrate may also have pores allowing fluid communication between adjacent exhaust gas flow paths.

The substrate may be appropriately selected according to the desired construction for the exhaust gas purification catalyst device. The constituent material of the substrate may be a fire resistant inorganic oxide such as cordierite, for example. The substrate may be either a straight flow type or a wall flow type.

The substrate of the exhaust gas purification catalyst device of the invention may typically be a cordierite straight flow type or wall flow type monolith honeycomb substrate, for example.

### <Noble metal catalyst particle-supporting layer>

The exhaust gas purification catalyst device of the invention has a noble metal catalyst particle-supporting layer inside the partition walls or on the partition walls of the substrate. The noble metal catalyst particle-supporting layer includes noble metal catalyst particles. The noble metal catalyst particles function as a catalyst for oxidizing purification of ammonia.

The noble metal catalyst particles of the noble metal catalyst particle-supporting layer may be particles of a metal selected from among platinum group noble metals, and specifically, they may be particles of one or more noble metals selected from among Pt, Rh and Pd, or particles of one or more noble metals selected from among Pt and Pd.

The particle diameter (primary particle size) of the noble metal catalyst particles may be 15 nm or greater, 20 nm or greater or 30 nm or greater, and 100 nm or smaller, 80 nm or smaller or 60 nm or smaller, for example. The particle diameter of the noble metal catalyst particles is the number-mean particle size determined from a photographed image obtained using a scanning electron microscope or transmission electron microscope.

The amount of noble metal catalyst particles of the noble metal catalyst particle-supporting layer may be 0.01 g/L or greater, 0.02 g/L or greater, 0.03 g/L or greater, 0.04 g/L or greater or 0.05 g/L or greater, and 2.00 g/L or lower, 1.50 g/L or lower, 1.00 g/L or lower, 0.50 g/L or lower, 0.30 g/L or lower or 0.10 g/L or lower, as the equivalent mass of the metal per 1 L of substrate capacity.

The noble metal catalyst particles of the exhaust gas purification catalyst device of the invention:
may be directly supported inside the partition walls of the substrate, forming a noble metal catalyst particle-supporting layer, or
may be supported on the inorganic oxide particles other than silica, with the noble metal catalyst particles supported on the inorganic oxide particles other than silica being disposed on the partition walls of the substrate, forming a noble metal catalyst particle-supporting layer.

That the noble metal catalyst particles are directly supported inside the partition walls of the substrate means that the noble metal catalyst particles are supported on the pore walls of the partition walls of the substrate without support particles. That the noble metal catalyst particles supported on inorganic oxide particles other than silica are disposed on the partition walls of the substrate means that at least some of the inorganic oxide particles, other than the silica on which the noble metal catalyst particles are supported, are disposed on the partition walls without infiltrating inside the pores of the partition walls of the substrate.

When the noble metal catalyst particles of the noble metal catalyst particle-supporting layer are supported on inorganic oxide particles other than silica, the inorganic oxide particles may be particles of an oxide of one or more metals selected from among titanium, zirconium and aluminum, and rare earth elements other than cerium.

It is not preferred for the noble metal catalyst particles of the noble metal catalyst particle-supporting layer to be supported on the inorganic oxide particles including silica, because this may impair the NH₃ purification activity of the noble metal catalyst.

### <Zeolite layer>

The zeolite layer is a layer comprising copper ion-exchanged zeolite, and it is present further toward the exhaust gas flow path side than the noble metal catalyst particle-supporting layer.

The silica-alumina ratio (SAR) of the copper ion-exchanged zeolite in the zeolite layer may be 15.0 or lower. Using zeolite with a SAR of 15.0 or lower will result in a high NOx purification rate during the SCR reaction. The SAR value is represented as the ratio (SiO₂/Al₂O₃) between the molar amount of silica (SiO₂) and the molar amount of alumina (Al₂O₃) in the zeolite.

The SAR of the copper ion-exchanged zeolite may be 14.0 or lower, 13.0 or lower, 12.0 or lower, 11.0 or lower, 10.0 or lower, 9.0 or lower or 8.0 or lower, from the viewpoint of obtaining a higher NOx purification rate. An excessively low SAR may interfere with synthesis of zeolite, however, and may lead to undesirable increase in catalyst cost. In order to avoid such a situation, the SAR of the copper ion-exchanged zeolite may be 4.0 or higher, 5.0 or higher, 6.0 or higher or 7.0 or higher.

The copper ion-exchanged zeolite in the zeolite layer is zeolite that has been ion-exchanged with Cu. From the viewpoint of increasing the SCR activity of the exhaust gas purification catalyst device of the invention, the amount of Cu in the copper ion-exchanged zeolite may be 0.08 mol or greater, 0.10 mol/mol or greater, 0.15 mol/mol or greater, 0.20 mol or greater or 0.25 mol/mol or greater, with respect to 1 mol of Al atoms in the zeolite.

There is no particular upper limit for the amount of Cu in the copper ion-exchanged zeolite from the viewpoint of SCR activity. Due to production limits for Cu in copper ion-exchanged zeolite, however, the amount of Cu in the copper ion-exchanged zeolite may be 0.80 mol or lower, 0.50 mol/mol or lower, 0.45 mol/mol or lower or 0.40 mol/mol or lower, with respect to 1 mol of Al atoms in the zeolite, from the viewpoint of maintaining suitable production cost for the exhaust gas purification catalyst device.

The amount of Cu in the copper ion-exchanged zeolite will typically be 0.10 mol or greater and 0.50 mol or lower with respect to 1 mol of Al atoms in the zeolite.

The crystal structure of the copper ion-exchanged zeolite in the zeolite layer is arbitrary. The crystal structures of copper ion-exchanged zeolite that can be used for the invention include (using their respective structure codes in parentheses): type A (LTA), ferrierite (FER), MCM-22 (MWW), ZSM-5 (MFI), mordenite (MOR), type L (LTL), type X or type Y (FAU), beta-type (BEA) and chabazite (CHA).

The copper ion-exchanged zeolite in the zeolite layer of the exhaust gas purification catalyst device of the invention may be, in particular, Cu-CH type zeolite A, which is chabazite (CHA) type zeolite ion-exchanged with Cu.

The copper ion-exchanged zeolite in the zeolite layer may be particulate. The particle diameter (secondary particle size) of particulate copper ion-exchanged zeolite may be 0.5 µm or greater, 1 µm or greater, 3 µm or greater or 5 µm or greater, and 40 µm or smaller, 20 µm or smaller or 10 µm or smaller, for example. The particle diameter of the support particles may be the median diameter (D50) obtained by a dynamic light scattering method, for a suspension in which the support particles are dispersed in an appropriate liquid medium (such as water).

The zeolite layer of the exhaust gas purification catalyst device of the invention may also include optional components other than the copper ion-exchanged zeolite. The optional components of the zeolite layer may be inorganic oxides other than the copper ion-exchanged zeolite, and a binder, for example. However, the zeolite layer does not need to include zeolite other than copper ion-exchanged zeolite.

From the viewpoint of increasing the SCR activity of the exhaust gas purification catalyst device of the invention, the amount of copper ion-exchanged zeolite in the zeolite layer may be 30 g/L or greater, 40 g/L or greater, 50 g/L or greater, 60 g/L or greater or 80 g/L or greater, as the mass per 1 L of substrate capacity. In order to avoid excessively increasing pressure loss in the exhaust gas purification catalyst device, however, the amount of copper ion-exchanged zeolite per 1 L of substrate capacity is preferably 200 g/L or lower, 180 g/L or lower, 150 g/L or lower, 120 g/L or lower or 100 g/L or lower.

The amount of copper ion-exchanged zeolite in the zeolite layer may typically be 30 g/L or greater and 200 g/L or lower.

The amount of the zeolite layer may be 30 g/L or greater, 40 g/L or greater, 50 g/L or greater, 60 g/L or greater or 80 g/L or greater, and 200 g/L or lower, 180 g/L or lower, 150 g/L or lower, 120 g/L or lower or 100 g/L or lower, as the mass per 1 L of substrate capacity.

### <Inorganic oxide particle layer>

The exhaust gas purification catalyst device of the invention has an inorganic oxide particle layer between the noble metal catalyst particle-supporting layer and the zeolite layer. The inorganic oxide particle layer includes inorganic oxide particles other than silica, and the noble metal catalyst content is 0.01 g/L or lower as the mass per 1 L of substrate capacity. The "noble metal catalyst content" of the inorganic oxide particle layer is the total content of Pt, Rh and Pd in the inorganic oxide particle layer.

The inorganic oxide particle layer functions as a barrier layer to prevent migration of silica, so as to inhibit the silica in the copper ion-exchanged zeolite in the zeolite layer (SCR layer) from migrating to the noble metal catalyst particle-supporting layer (ASC layer) and reducing the NH₃ purification activity of the noble metal catalyst in the noble metal catalyst particle-supporting layer. The inorganic oxide particle layer therefore does not need to contain any substantial amount of silica. The amount of silica in the inorganic oxide particle layer, including the amount in complex oxides of silicon with other inorganic elements, may be 1.0 g/L or lower, 0.5 g/L or lower, 0.1 g/L or lower, 0.05 g/L or lower or 0.01 g/L or lower, or even 0 g/L, as the mass per 1 L of substrate capacity.

That the noble metal catalyst content of the inorganic oxide particle layer is 0.01 g/L or lower means that the inorganic oxide particle layer does not need to contain substantially any amount of noble metal catalyst with NH₃ purification activity. The noble metal catalyst content in the inorganic oxide particle layer may be 0.005 g/L or lower, 0.001 g/L or lower, 0.0005 g/L or lower or 0.0001 g/L or lower, or even 0 g/L.

The inorganic oxide particles other than silica in the inorganic oxide particle layer are particles of an oxide of one or more metals selected from among Ce, Ti, Zr, Al, La, Fe, Co, Mn, V, W, Cu and Ni. Most preferred are particles of one or more inorganic oxides selected from among alumina, titania and ceria.

From the viewpoint of both functions of preventing migration of silica and allowing permeation of gas, the particle diameter of the inorganic oxide particles in the inorganic oxide particle layer may be 0.5 µm or greater, 0.7 µm or greater, 1.0 µm or greater, 1.2 µm or greater, 1.5 µm or greater, 2.0 µm or greater or 2.5 µm or greater, and 5.0 µm or smaller, 4.5 µm or smaller, 4.0 µm or smaller, 3.5 µm or smaller, 3.0 µm or smaller, 2.5 µm or smaller or 2.0 µm or smaller.

The particle diameter of the inorganic oxide particles will typically be 0.5 µm or greater and 5.0 µm or smaller.

The particle diameter of the inorganic oxide particles in the inorganic oxide particle layer is the median diameter (D50) obtained by dynamic light scattering measurement.

The inorganic oxide particle layer of the exhaust gas purification catalyst device of the invention may also include other components such as a binder, in addition to the inorganic oxide particles.

The coating thickness of the inorganic oxide particle layer in the exhaust gas purification catalyst device of the invention may be established as appropriate from the viewpoint of both functions of preventing migration of silica and allowing permeation of gas. The coating thickness of the inorganic oxide particle layer may be 2.0 µm or greater, 3.0 µm or greater, 5.0 µm or greater, 10.0 µm or greater, 15.0 µm or greater or 20.0 µm or greater, and 30.0 µm or smaller, 25.0 µm or smaller, 20.0 µm or smaller, 15.0 µm or smaller or 10.0 µm or smaller.

The coating thickness of the inorganic oxide particle layer will typically be 2.0 µm or greater and 25.0 µm or smaller.

The coating thickness of the inorganic oxide particle layer can be set to any desired thickness by adjusting the particle diameter of the inorganic oxide particles in the inorganic oxide particle layer, and the coating amount of the inorganic oxide particle layer, for example.

The coating amount of the inorganic oxide particle layer can be set as appropriate for a suitable coating thickness of the inorganic oxide particle layer, in consideration of the particle diameter of the inorganic oxide particles in the inorganic oxide particle layer. The coating amount of the inorganic oxide particle layer may be 3.0 g/L or greater, 5.0 g/L or greater, 10.0 g/L or greater, 20.0 g/L or greater, 30.0 g/L or greater, 4.0 g/L or greater or 50.0 g/L or greater, and 100.0 g/L or lower, 90.0 g/L or lower, 80.0 g/L or lower, 70.0 g/L or lower, 60.0 g/L or lower or 50.0 g/L or lower, as the mass per 1 L of substrate capacity.

### <Method for producing exhaust gas purification catalyst device>

The exhaust gas purification catalyst device of the invention can be produced by any method so long as it has the construction described above. However, the exhaust gas purification catalyst device of the invention may be produced, for example, by a method for producing an exhaust gas purification catalyst device which comprises:
forming a noble metal catalyst particle-supporting layer inside the partition walls or on the partition walls of the substrate,
forming an inorganic oxide particle layer on the substrate on which the noble metal catalyst particle-supporting layer has been formed, and
forming a zeolite layer on the substrate on which the noble metal catalyst particle-supporting layer and inorganic oxide particle layer have been formed.

### <Substrate>

The substrate may be appropriately selected according to the substrate of the exhaust gas purification catalyst device, and will typically be a cordierite straight flow type or wall flow type monolith honeycomb substrate, for example.

### <Formation of noble metal catalyst particle-supporting layer>

As mentioned above, the noble metal catalyst particles in the noble metal catalyst particle-supporting layer of the exhaust gas purification catalyst device of the invention may be directly supported inside the partition walls or on the partition walls of the substrate, or they may be appropriately supported on the support particles. Formation of the noble metal catalyst particle-supporting layer will now be described for when the noble metal catalyst particles are directly supported inside the partition walls or on the partition walls of the substrate, and for when the noble metal catalyst particles are supported on the support particles, in that order.

### (Formation of noble metal catalyst particle-supporting layer with noble metal catalyst particles directly supported inside the partition walls or on the partition walls of the substrate)

In this case, for example, a wash coat solution 1 comprising a noble metal precursor and a suitable solvent may be coated onto the substrate and fired to form the noble metal catalyst particle-supporting layer. The wash coat solution 1 may include a thickener and may be adjusted to a suitable viscosity.

The noble metal precursor may be a halide, strong acid salt or complex compound of the noble metal that is to compose the noble metal catalyst particles. When the noble metal catalyst particles are platinum particles, for example, the noble metal precursor may be tetraamine platinum hydroxide, tetraamine platinum chloride, ammonium tetrachloroplatinate, ammonium hexachloroplatinate or dinitrodiamine-platinum (nitric acid solution), for example.

The thickener may be a polysaccharide or a polymer that is soluble in the solvent, for example, and specifically hydroxyethyl cellulose, carboxymethyl cellulose, linseed gum, xanthan gum, polyacrylic acid or a polyether.

The solvent of the wash coat solution 1 may be one or more selected from among water and water-soluble organic solvents, but will typically be water.

Coating and firing of the wash coat solution 1 on the substrate may be carried out by publicly known methods, or by such methods with appropriate modifications made by a person skilled in the art.

The viscosity, coating conditions and time until firing after completion of coating of the wash coat solution 1 may be adjusted as appropriate to allow formation of a noble metal catalyst particle-supporting layer on the partition walls of the substrate or inside the partition walls to an arbitrary depth.

### (Formation of noble metal catalyst particle-supporting layer with noble metal catalyst particles supported on support particles)

In this case, a wash coat solution 1' comprising, for example, support particles on which the noble metal catalyst particles are supported, and an appropriate solvent, may be coated onto the substrate and fired to form the noble metal catalyst particle-supporting layer. The wash coat solution 1' may also include other optional components for the noble metal catalyst particle-supporting layer, as well as a thickener, for adjustment to an appropriate viscosity.

The support particles may be appropriately selected according to the support particles in the noble metal catalyst particle-supporting layer to be formed. Therefore the support particles may be particles of an inorganic oxide other than silica, such as particles of one or more oxides of elements selected from among titanium, zirconium and aluminum, and rare earth elements other than cerium.

The noble metal catalyst particles may be supported on support particles by contacting the support particles and the noble metal precursor, and then firing them. The contact may be carried out in the presence of an appropriate solvent, such as one or more solvents from among water and water-soluble organic solvents, and typically water, or in a solventless state. Firing may be carried out by a publicly known method, or by such a method with appropriate modification made by a person skilled in the art.

The optional components in the wash coat solution 1' may be appropriately selected depending on the desired structure for the noble metal catalyst particle-supporting layer. The wash coat solution 1' may also include inorganic oxide particles other than the support particles, and a binder, for example.

The thickener and solvent in the wash coat solution 1' may be the same as for the wash coat solution 1 used to form the noble metal catalyst particle-supporting layer with the noble metal catalyst particles directly supported on the substrate.

Coating and firing of the wash coat solution 1' on the substrate may be carried out by publicly known methods, or by such methods with appropriate modifications made by a person skilled in the art.

### <Formation of inorganic oxide particle layer>

Formation of the inorganic oxide particle layer on the substrate on which the noble metal catalyst particle-supporting layer has been formed may be by coating and firing a wash coat solution 2, comprising inorganic oxide particles having a desired particle diameter and an appropriate solvent, onto the substrate on which the noble metal catalyst particle-supporting layer has been formed. The wash coat solution 2 may include a thickener and may be adjusted to a suitable viscosity.

The inorganic oxide particles may be appropriately selected depending on the inorganic oxide particles to be in the inorganic oxide particle layer that is formed.

The thickener and solvent in the wash coat solution 2 may be the same as for the wash coat solution 1.

Coating and firing of the wash coat solution 2 on the substrate on which the noble metal catalyst particle-supporting layer has been formed may be carried out by publicly known methods, or by such methods with appropriate modifications made by a person skilled in the art.

### <Formation of zeolite layer>

Formation of the zeolite layer in the method for producing an exhaust gas purification device of the invention may be carried out by coating and firing a wash coat solution 3, comprising copper ion-exchanged zeolite and an appropriate solvent, onto the substrate having the noble metal catalyst particle-supporting layer and inorganic oxide particle layer. The wash coat solution 3 may include a thickener and may be adjusted to a suitable viscosity. The wash coat solution 3 may also include optional components such as an inorganic oxide other than copper ion-exchanged zeolite and a binder, for example, with the types and amounts of the optional components being selected as appropriate depending on the desired structure for the zeolite layer.

The thickener and solvent in the wash coat solution 3 may be the same as for the wash coat solution 1.

Coating and firing of the wash coat solution 3 on the substrate having the noble metal catalyst particle-supporting layer and inorganic oxide particle layer may be carried out by publicly known methods, or by such methods with appropriate modification made by a person skilled in the art.

An exhaust gas purification catalyst device of the invention is obtained by carrying out the method described above.

### EXAMPLES

### <Example 1>

### <Production of exhaust gas purification catalyst device>

### (1) Preparation of wash coat solution 1

A tetramine-platinum(II) hydroxide aqueous solution as a noble metal precursor was mixed with purified water, and a polysaccharide thickener was further added, to obtain a wash coat solution 1 comprising the noble metal precursor. The Pt concentration in the wash coat solution 1 was 0.030 mass% in terms of Pt metal.

### (2) Preparation of wash coat solution 2

Alumina particles (median diameter (D50): 1.0 µm) as inorganic oxide particles and purified water were mixed, and a polysaccharide thickener was further added to prepare wash coat solution 2 comprising the inorganic oxide particles. The inorganic oxide particle content in the wash coat solution 2 was 20 mass%.

### (3) Preparation of wash coat solution 3

Cu-CH type zeolite A having a silica-alumina ratio (SAR) of 13.5 and a Cu content per Al atom of 0.28 mol/mol-Al, a silica-based binder and purified water were mixed, and a polysaccharide thickener was further added, to obtain wash coat solution 3 comprising the Cu-CH type zeolite A.

### (4) Formation of coating layers (exhaust gas purification catalyst device production)

The obtained wash coat solution 1 was coated onto a 17 mL-volume straight flow type honeycomb substrate made of cordierite to a Pt amount of 0.05 g/L as Pt metal, and then fired in air at 500°C for 15 minutes, forming a noble metal catalyst particle-supporting layer having Pt particles directly supported in the partition walls of the substrate, to obtain catalyst device precursor 1.

Next, the obtained wash coat solution 2 was coated onto the catalyst device precursor 1 to an inorganic oxide particle amount of 50.0 g/L, and fired in air at 500°C for 15 minutes, forming an inorganic oxide particle layer on the partition walls of the substrate, to obtain catalyst device precursor 2.

The obtained wash coat solution 3 was then coated onto the catalyst device precursor 2 to a Cu-CH type zeolite A amount of 100 g/L and fired in air at 500°C for 15 minutes, forming a zeolite layer comprising Cu-CH type zeolite A on the inorganic oxide particle layer, to obtain an exhaust gas purification catalyst device for Example 1.

The coating thickness of the inorganic oxide particle layer of the exhaust gas purification catalyst device of Example 1 was examined by scanning electron microscope observation and found to be 12.4 µm.

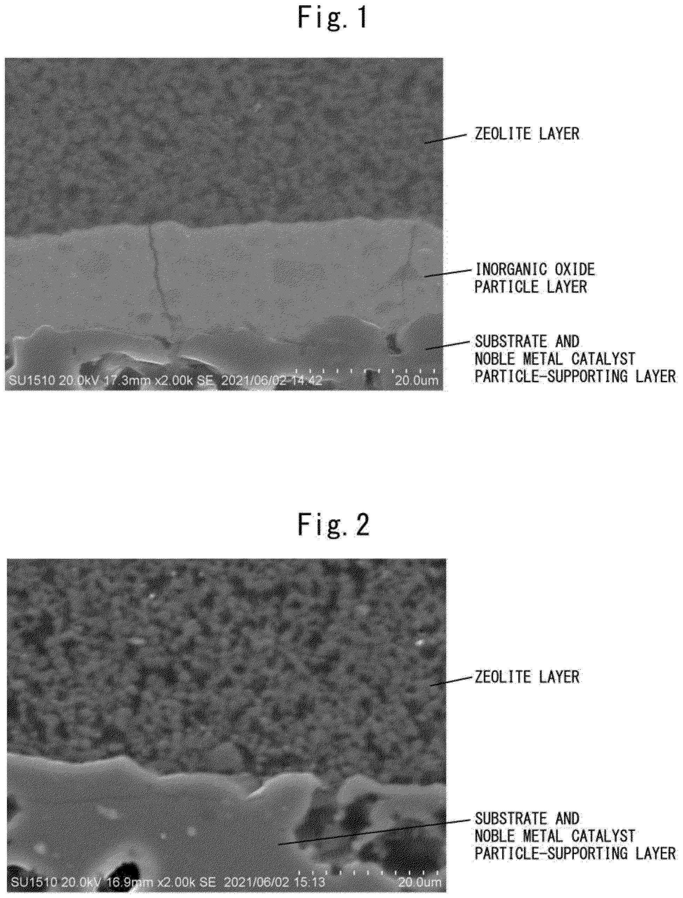

Fig. 1 is a scanning electron microscope image of the exhaust gas purification catalyst device of Example 1.

### (5) Evaluation of exhaust gas purification catalyst device

The exhaust gas purification catalyst device was evaluated for NH₃ purification performance before and after hydrothermal endurance. Hydrothermal endurance was conducted by distributing air with a moisture concentration of 10 vol% through the exhaust gas purification catalyst device while heating it at 700°C for 50 hours.

The NH₃ purification performance was evaluated by introducing and distributing a model gas containing NH₃ of known concentration and set to different predetermined temperatures through the exhaust gas purification catalyst device before and after hydrothermal endurance, measuring the NH₃ in the exhaust gas and calculating the NH₃ purification rate using the following formula. NH3 purification rate (%) = {(NH3 concentration in introduced gas - NH3 concentration in exhaust gas)/NH3 concentration in introduced gas} × 100

The model gas introduction conditions were set as follows:
Model gas composition: NH₃: 500 ppm, O₂: 10%, H₂O: 5%, N₂: balance
Space velocity during model gas introduction: 60,000 hr⁻¹

Table 2 shows the evaluation results before hydrothermal endurance, as the NH₃ purification rate with an inlet gas temperature of 300°C, and the evaluation results after hydrothermal endurance, as the NH₃ purification rate with inlet gas temperatures of 300°C, 350° and 400°C.

### <Examples 2 to 8>

Exhaust gas purification catalyst devices were produced and evaluated in the same manner as Example 1, except that the types and particle diameters of the inorganic oxide particles in the wash coat solution 2 and the coating amounts and coating thicknesses of the inorganic oxide layers were changed as shown in Table 1. The evaluation results are shown in Table 2.

### <Comparative Example 1>

An exhaust gas purification catalyst device was produced and evaluated in the same manner as Example 1, except that the inorganic oxide particle layer was formed with wash coat solution 2. The evaluation results are shown in Table 2.

Fig. 2 is a scanning electron microscope image of the exhaust gas purification catalyst device of Comparative Example 1.

### [Table 1]

**Table 1.**

| | Wash coat solution 1 | | | | Wash coat solution 2 | | | | | | Wash coat solution 3 | |
|---|---|---|---|---|---|---|---|---|---|---|---|---|
| | Noble metal precursor | | Thickener | Pt coating amount (g/L) | Inorganic oxide particles | | | Thickener | Inorganic oxide particle layer | | Zeolite | |
| | Type | Metal-equivalent concentration (wt%) | Type | | Type | Particle diameter D50 (µm) | Concentration (wt%) | Type | Coating amount (g/L) | Coating thickness (µm) | Type | Coating amount (g/L) |
| Example 1 | Pt-amine | 0.030 | Polysaccharide | 0.05 | Al₂O₃ | 1.0 | 20.0 | Polysaccharide | 50.0 | 12.4 | Cu-CHA | 100 |
| Example 2 | Pt-amine | 0.030 | Polysaccharide | 0.05 | Al₂O₃ | 3.0 | 20.0 | Polysaccharide | 50.0 | 16.3 | Cu-CHA | 100 |
| Example 3 | Pt-amine | 0.030 | Polysaccharide | 0.05 | TiO₂ | 1.0 | 20.0 | Polysaccharide | 50.0 | 12.9 | Cu-CHA | 100 |
| Example 4 | Pt-amine | 0.030 | Polysaccharide | 0.05 | CeO₂ | 1.0 | 20.0 | Polysaccharide | 50.0 | 13.4 | Cu-CHA | 100 |
| Example 5 | Pt-amine | 0.030 | Polysaccharide | 0.05 | Al₂O₃ | 1.0 | 20.0 | Polysaccharide | 25.0 | 9.9 | Cu-CHA | 100 |
| Example 6 | Pt-amine | 0.030 | Polysaccharide | 0.05 | Al₂O₃ | 1.0 | 20.0 | Polysaccharide | 75.0 | 19.1 | Cu-CHA | 100 |
| Example 7 | Pt-amine | 0.030 | Polysaccharide | 0.05 | Al₂O₃ | 1.0 | 3.5 | Polysaccharide | 3.0 | 1.5 | Cu-CHA | 100 |
| Example 8 | Pt-amine | 0.030 | Polysaccharide | 0.05 | Al₂O₃ | 1.0 | 20.0 | Polysaccharide | 100.0 | 30.0 | Cu-CHA | 100 |
| Comp. Example 1 | Pt-amine | 0.030 | Polysaccharide | 0.05 | - | - | - | - | - | - | Cu-CHA | 100 |

### [Table 2]

**Table 2**

| | Noble metal catalyst particle-supporting layer | | Inorganic oxide particle layer | | | | Zeolite layer | | NH₃ purification rate (%) | | | |
|---|---|---|---|---|---|---|---|---|---|---|---|---|
| | Precursor type | Pt coating amount (g/L) | Type | Particle diameter D50 (µm) | Coating amount (g/L) | Coating thickness (µm) | Type | Coating amount (g/L) | Before hydrothermal endurance | After hydrothermal endurance | | |
| | | | | | | | | | 300°C | 300°C | 350°C | 400°C |
| Example 1 | Pt-amine | 0.05 | Al₂O₃ | 1.0 | 50.0 | 12.4 | Cu-CHA | 100 | 98.7 | 98.0 | 99.0 | 99.0 |
| Example 2 | Pt-amine | 0.05 | Al₂O₃ | 3.0 | 50.0 | 16.3 | Cu-CHA | 100 | 98.4 | 98.0 | 99.0 | 99.0 |
| Example 3 | Pt-amine | 0.05 | TiO₂ | 1.0 | 50.0 | 12.9 | Cu-CHA | 100 | 98.2 | 97.4 | 99.0 | 99.0 |
| Example 4 | Pt-amine | 0.05 | CeO₂ | 1.0 | 50.0 | 13.4 | Cu-CHA | 100 | 98.4 | 97.7 | 99.0 | 99.0 |
| Example 5 | Pt-amine | 0.05 | Al₂O₃ | 1.0 | 25.0 | 9.9 | Cu-CHA | 100 | 97.9 | 97.5 | 99.0 | 99.0 |
| Example 6 | Pt-amine | 0.05 | Al₂O₃ | 1.0 | 75.0 | 19.1 | Cu-CHA | 100 | 98.3 | 97.6 | 99.0 | 99.0 |
| Example 7 | Pt-amine | 0.05 | Al₂O₃ | 1.0 | 3.0 | 1.5 | Cu-CHA | 100 | 98.3 | 72.0 | 85.0 | 92.0 |
| Example 8 | Pt-amine | 0.05 | Al₂O₃ | 1.0 | 100.0 | 30.0 | Cu-CHA | 100 | 86.4 | 84.3 | 88.0 | 91.0 |
| Comp. Example 1 | Pt-amine | 0.05 | - | - | - | - | Cu-CHA | 100 | 98.6 | 54.2 | 79.3 | 84.8 |

The abbreviations of the components in tables stand for the following.

### <Noble metal precursor>

Pt-amine: Tetramine-platinum(II) hydroxide aqueous solution

### <Zeolite>

Cu-CHA: Cu-CH type zeolite A with silica-alumina ratio (SAR)of 13.5, and Cu amount per Al atom of 0.28 mol/mol-Al

As shown in Tables 1 and 2, the exhaust gas purification catalyst devices of Examples 1 to 8 each having an inorganic oxide particle layer between a noble metal particle supporting layer and a zeolite layer exhibited superior NH₃ purification performance after hydrothermal endurance, compared to the exhaust gas purification catalyst device of Comparative Example 1 which did not have an inorganic oxide particle layer.

The NH₃ purification performance after hydrothermal endurance was particularly high with the exhaust gas purification catalyst devices of Examples 1 to 6, wherein the coating thicknesses of the inorganic oxide particle layers satisfied the condition of being 2.0 µm or greater and 25.0 µm or smaller.

## Claims

1. An exhaust gas purification catalyst device comprising:
a honeycomb substrate having numerous exhaust gas flow paths divided by partition walls,
a noble metal catalyst particle-supporting layer inside the partition walls or on the partition walls of the substrate, and
a zeolite layer which includes copper ion-exchanged zeolite further toward the exhaust gas flow path side than the noble metal catalyst particle-supporting layer,
wherein:
the noble metal catalyst particle-supporting layer includes noble metal catalyst particles, and
the exhaust gas purification catalyst device further comprises an inorganic oxide particle layer with inorganic oxide particles other than silica included between the noble metal catalyst particle-supporting layer and the zeolite layer, with a noble metal catalyst content of lower than 0.01 g/L.

2. The exhaust gas purification catalyst device according to claim 1, wherein the coating thickness of the inorganic oxide particle layer is 2.0 µm or greater and 25.0 µm or smaller.

3. The exhaust gas purification catalyst device according to claim 1 or 2, wherein the inorganic oxide particles in the inorganic oxide particle layer are particles of an oxide of one or more metals selected from among Ce, Ti, Zr, Al, La, Fe, Co, Mn, V, W, Cu and Ni.

4. The exhaust gas purification catalyst device according to any one of claims 1 to 3, wherein the particle diameter (D50) of the inorganic oxide particles in the inorganic oxide particle layer is 0.5 µm or greater and 5.0 µm or smaller.

5. The exhaust gas purification catalyst device according to any one of claims 1 to 4, wherein the silica-alumina ratio (SAR) of the copper ion-exchanged zeolite in the zeolite layer is 15.0 or lower.

6. The exhaust gas purification catalyst device according to any one of claims 1 to 5, wherein the amount of Cu in the copper ion-exchanged zeolite in the zeolite layer is 0.10 mol or greater and 0.50 mol or lower with respect to 1 mol of Al atoms in the zeolite.

7. The exhaust gas purification catalyst device according to any one of claims 1 to 6, wherein the amount of copper ion-exchanged zeolite in the zeolite layer is 30 g/L or greater and 200 g/L or lower.

8. The exhaust gas purification catalyst device according to any one of claims 1 to 7, wherein the copper ion-exchanged zeolite is Cu-CH type zeolite A.

9. The exhaust gas purification catalyst device according to any one of claims 1 to 8, wherein the noble metal catalyst particle-supporting layer includes particles of a noble metal catalyst selected from among Pt, Rh and Pd.

10. The exhaust gas purification catalyst device according to any one of claims 1 to 9, wherein the noble metal catalyst particles are directly supported inside the partition walls of the substrate, forming a noble metal catalyst particle-supporting layer.

11. The exhaust gas purification catalyst device according to any one of claims 1 to 9, wherein the noble metal catalyst particles are supported on inorganic oxide particles other than silica, and the noble metal catalyst particles supported on the inorganic oxide particles other than silica are disposed on the partition walls of the substrate, forming a noble metal catalyst particle-supporting layer.
